Europäisches Patentamt

European Patent Office

Office européen des brevets

(11) Numéro de publication: **0 226 486**
**A2**

# DEMANDE DE BREVET EUROPEEN

(21) Numéro de dépôt: **86402421.1**

(22) Date de dépôt: **29.10.86**

(51) Int. Cl.⁴: **G 01 N 25/60**

(30) Priorité: **31.10.85 FR 8516213**

(43) Date de publication de la demande:
**24.06.87 Bulletin 87/26**

(84) Etats contractants désignés:
**AT BE CH DE ES GB IT LI LU NL SE**

(71) Demandeur: **ELECTRICITE DE FRANCE Service National**
**2, rue Louis Murat**
**F-75008 Paris(FR)**

(72) Inventeur: **Courant Jean-Jacques**
**20, rue de la Source**
**F-78520 Limay(FR)**

(72) Inventeur: **Bialod Dan,Marc**
**3, rue Lacuee**
**F-75012 Paris(FR)**

(74) Mandataire: **CABINET BONNET-THIRION**
**95 Boulevard Beaumarchais**
**F-75003 Paris(FR)**

(54) Perfectionnement aux minicalorimètres.

(57) Minicalorimètre, notamment destiné à la mesure du titre de la vapeur, comportant une source de rayonnement électromagnétique permettant de transformer la vapeur en plasma.

Une reconstitution de la vapeur s'effectue en aval, dans son sens d'écoulement, et permet ainsi sa mesure à l'état surchauffé, homogène.

FIG. 1

EP 0 226 486 A2

"Perfectionnement aux minicalorimètres"

--------

La présente invention concerne un dispositif destiné à la mesure du titre de l'humidité de la vapeur d'eau.

De manière connue, on utilise pour cette mesure un calorimètre, couramment appelé "minicalorimètre", du fait de sa petite taille, que l'on dispose dans le passage du fluide, de la vapeur en l'espèce, orienté dans la direction de l'écoulement.

Plus précisément, le calorimètre comporte une sonde qui prélève dans la veine d'écoulement du fluide un échantillon de celui-ci.

Afin de permettre une mesure correcte de l'humidité du fluide, il convient de préserver la condition d'isocinétisme, ce qui revient, en pratique, à assurer une vitesse d'écoulement du fluide à l'entrée de la sonde identique à celle de l'écoulement dans la veine.

Pour ce faire, on règle la vitesse à l'entrée de la sonde de prélèvement en ajustant le débit dont elle est fonction de la vapeur à la sortie du calorimètre, à l'aide d'une vanne de laminage, par exemple.

La vitesse d'écoulement de la vapeur dans la veine est simplement mesurée séparément généralement à l'aide d'un anémoclinomètre.

A la sortie du calorimètre, en aval de la vanne, la vapeur est envoyée dans un condenseur, pour être transformée en eau.

Connaissant la vitesse d'écoulement de la vapeur, on mesure le débit d'eau condensée recueillie à l'aide d'un puits étalonné et d'un chronomètre.

Traditionnellement, à l'intérieur du calorimètre, on surchauffe la vapeur par des moyens appropriés, afin de la faire passer de l'état saturé à l'état surchauffé, état dans lequel sa température augmente de façon inversément proportionnelle au débit-masse de l'eau condensée, et de façon proportionnelle à la puissance fournie par les moyens

2

de surchauffe. Il est aisé de connaître l'énergie procurée par les moyens de surchauffe.

Tous les autres paramètres étant donc connus, par mesures appropriées, l'humidité de la vapeur se déduit directement de la quantité d'énergie, électrique dans la plupart des réalisations, fournie au système pour surchauffer la vapeur.

Ce type de mesure est couramment utilisé pour établir, par exemple, une cartographie de l'humidité en aval d'une turbine à vapeur, ou plus généralement en tout lieu où l'on désire connaître le taux d'humidité de la vapeur. Cependant, la précision de mesure obtenue suivant ce procédé est généralement considérée comme insuffisante. En effet, en l'absence de surchauffe complète de la vapeur, le fluide ne peut être homogène et contient des gouttelettes en suspension. Il en résulte un manque de stabilité thermique, et donc une variation de la mesure obtenue, donc une imprécision.

L'objet de la présente invention est de remédier à cet inconvénient.

Plus précisément, l'objet de la présente invention est un minicalorimètre permettant des mesures précises du titre d'humidité de la vapeur, par une homogénéisation totale de celle-ci.

A cet effet, un calorimètre selon l'invention notamment destiné à la mesure du titre de vapeur humide comportant une buse de prélèvement de vapeur , un conduit permettant l'écoulement de ladite vapeur, des moyens de mesure de température, des moyens de mesure de pression, et des moyens d'évacuation de la vapeur, calorimètre caractérisé en ce qu'il comporte également des moyens de transformation de la vapeur en plasma, mettant en oeuvre au moins une source de rayonnement électromagnétique.

En pratique, après transformation à l'état de plasma, la vapeur se reconstitue d'elle-même de façon homogène. Après reconstitution, elle se trouve à l'état surchauffé.

0226486

A cette fin, lesdits moyens de transformation comportent une antenne de couplage avec une cavité résonante de longueur réglable, faisant partie du calorimètre selon l'invention.

De préférence, ladite cavité est formée par un espace séparant un tronçon d'un conduit permettant l'écoulement de la vapeur, constitué d'une paroi extérieure métallique, d'une enveloppe annulaire métallique qui lui est concentrique et l'entoure.

Selon un autre aspect de l'invention, ladite cavité s'étend axialement entre d'une part un élément métallique annulaire dont le bord intérieur formant l'une des extrémités de la cavité est évasé, et d'autre part une bague annulaire en un métal électroniquement bon conducteur mettant en court-circuit les parois dudit conduit et de ladite enveloppe, ladite bague annulaire étant mobile axialement de manière à permettre le réglage de la longueur de la cavité.

L'invention concerne également un procédé de mesure du titre d'un mélange biphasé de vapeur et de gouttelettes d'eau du genre comportant une étape de transformation du mélange biphasé en vapeur sèche, la température et la pression de la vapeur sèche étant mesurées, et ladite vapeur sèche étant ensuite condensée, procédé caractérisé en ce que le mélange biphasé est d'abord transformé en plasma et se reconstitue ensuite en vapeur sèche.

Les caractéristiques et avantages de la présente invention apparaîtront d'ailleurs de la description qui va suivre à titre d'exemple d'un mode de réalisation préférentiel de l'invention en référence aux dessins annexés dans lesquels :

la figure 1 représente une coupe axiale d'un dispositif selon l'invention dans une position de réglage ;

la figure 2 représente une coupe axiale similaire à la figure 1 d'un dispositif selon l'invention dans une deuxième position de réglage ;

la figure 3 représente une vue agrandie de la partie III de la figure 1 ;

la figure 3A représente une vue agrandie de la partie IIIA de la figure 1 ;

la figure 3B représente une vue agrandie de la partie IIIB de la figure 1 ;

la figure 4 représente une coupe transversale du dispositif selon l'invention selon la ligne IV-IV de la figure 3.

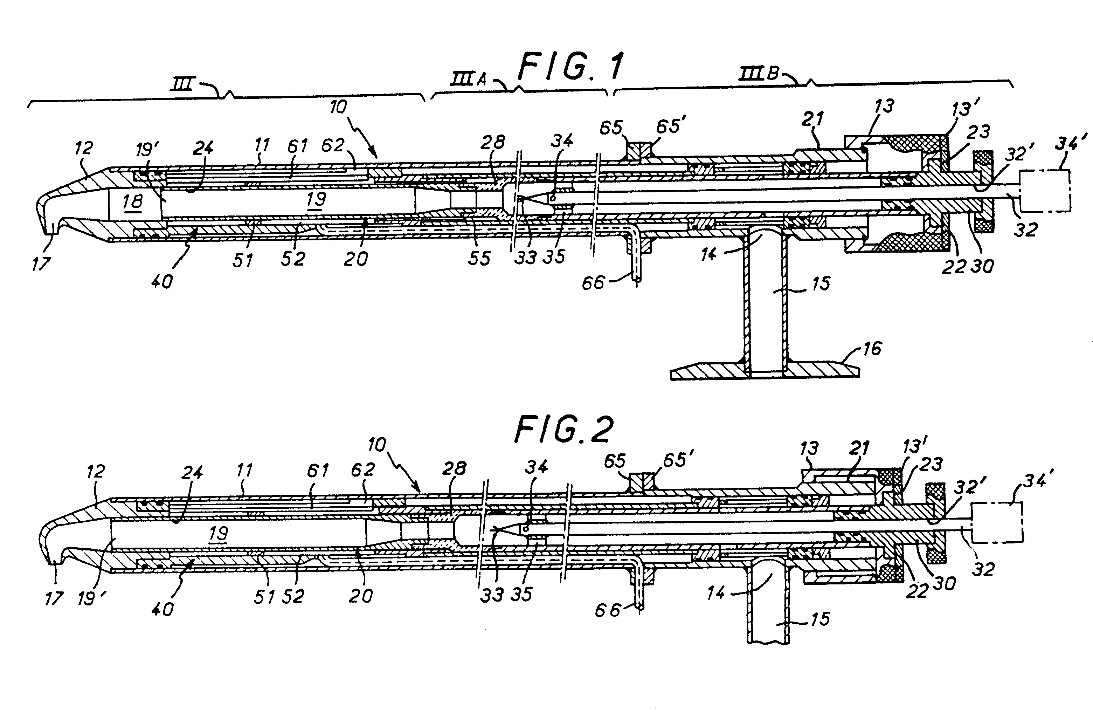

Plus en détail, en référence aux figures 1, 2 et 3, un calorimètre 10 selon l'invention comporte un tube métallique formant enveloppe extérieure 11. A l'une de ses extrémités, l'enveloppe métallique 11, est terminée par une buse 12 coudée à angle droit, buse dite de prélèvement.

L'extrémité opposée de l'enveloppe 11 est obturée par une culasse 13. A proximité de la culasse 13, un orifice 14 est ménagé dans la paroi de l'enveloppe 11 reliant celle-ci à un tube dit d'évacuation 15, lui-même fixé sur une embase de fixation 16.

Une description plus détaillée de la liaison entre l'enveloppe 11 et le tube 15 sera donnée ci-après.

Une embouchure 17 de la buse de prélèvement 12 débouche sur une chambre cylindrique 18, en aval, elle-même étant raccordée à un conduit 19, ledit conduit 19, dont la section varie le long de son étendue axiale, relie la chambre 18 communiquant à l'extrémité aval du calorimètre.

Comme le montre plus particulièrement la comparaison des figures 1 et 2, le conduit 19, délimité par une paroi globalement référencée 20, peut se déplacer axialement à l'intérieur de l'enveloppe 11. On notera à cet effet, qu'une extrémité dite antérieure 19' du conduit 19, à savoir l'extrémité amont située du côté de la buse de prélèvement 12, peut coulisser axialement à l'intérieur de la chambre 18, et sur toute l'étendue axiale de celle-ci, de la buse 12.

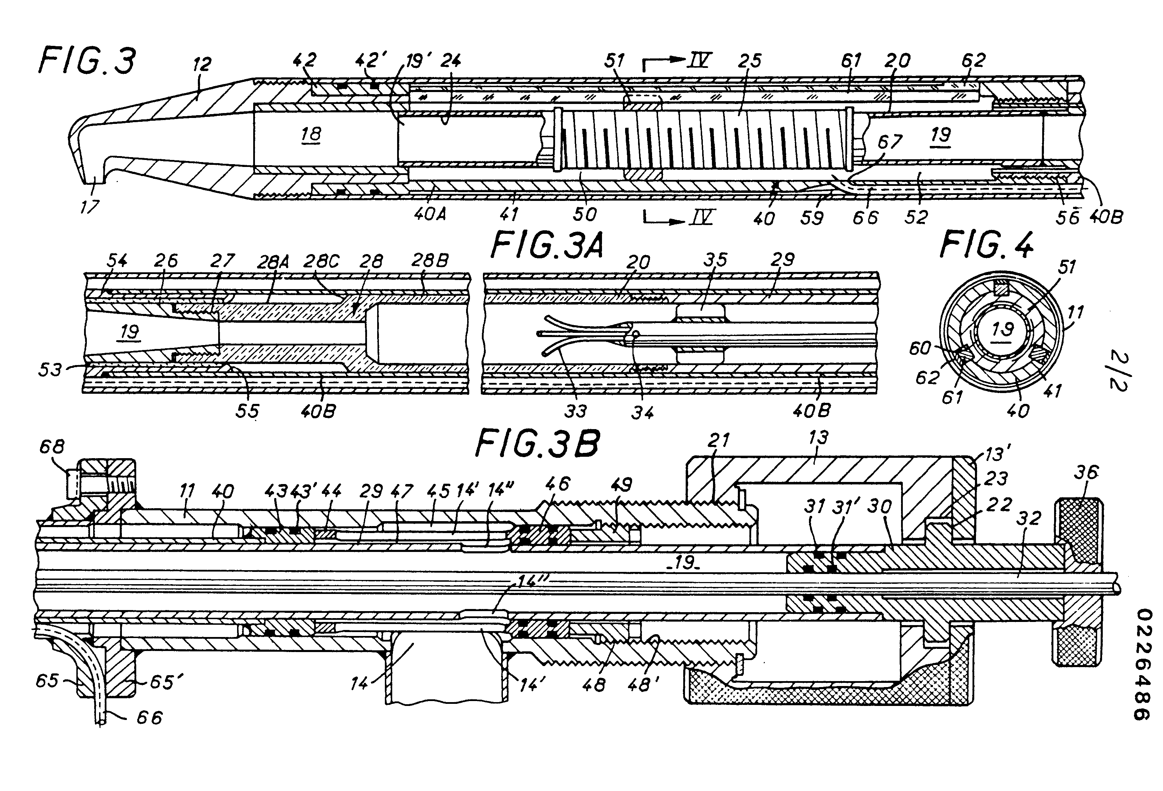

Comme le représente plus particulièrement la figure 3B, l'ensemble du conduit 19 est axialement solidaire en déplacement de la culasse 13, dont la position axiale relative à l'enveloppe 11 est déterminée par sa rotation sur un filetage 21 ménagé à l'extrémité aval de l'enveloppe 11. L'extrémité aval du conduit 19 est obturée par un bouchon 30 pénétrant à l'intérieur du conduit 19, un tel bouchon 30 étant en saillie axiale prolongeant le conduit 19 vers l'aval et traversant la culasse 13. Un tel bouchon est apte à coopérer avec un dégagement 23 ménagé à cet effet à l'intérieur de la culasse 13.

Plus précisément la saillie radiale 22, précédemment mentionnée, s'étend à partir du bouchon 30 et se trouve libre en rotation dans un dégagement 23 constitué d'une gorge annulaire ménagée dans la culasse 13, solidarisant ainsi axialement le bouchon 30 à cette dernière.

Afin de permettre le montage du bouchon 30 dans la culasse 13, cette dernière est munie d'une plaque amovible de fermeture 13', fixée au corps de la culasse 13 par des moyens non représentés.

Quatre joints annulaires élastiques 31, 31' sont logés dans des gorges ménagées à cet effet dans le bouchon 30 pour assurer l'étanchéité de celui-ci avec le conduit 19, d'une part et en ce qui concerne les joints 31 et, d'autre part, autour d'un passage 32' ménagé axialement dans le bouchon 30 pour passer une sonde 32, en ce qui concerne les joints 31'.

La sonde 32 s'étend axialement à l'intérieur d'une portion aval du conduit 19, et comporte à son extrémité trois capteurs de température 33 ainsi qu'une ouverture 34 apte à prélever la pression de gaz à l'intérieur du conduit 19, et à la transmettre à travers ladite sonde 32 jusqu'à des moyens capteurs de pression 34' disposés à l'extérieur de celle-ci, symboliquement représentés sur la figure 1.

Un support 35 est disposé autour de la sonde 32, un tel support étant apte à coulisser axialement à l'intérieur du conduit 19, de manière à maintenir la position radiale de la sonde 32 concentrique au conduit 19. Avantageusement, le support 35 présente une section en étoile à trois branches.

En référence aux figures 1 à 3B, le conduit 19 est globalement constitué de quatre parties principales, successives, d'amont en aval. Une première partie 24 (figure 3) est constituée d'un tube métallique, muni sur une partie de son étendue axiale et à l'extérieur d'un filetage 25.

Cette première partie est reliée à une deuxième partie 26 (figure 3A) qui le prolonge axialement, et de forme interne globalement tronconique. Cette deuxième partie 26 est également métallique et est reliée à la première par soudage. La deuxième partie tronconique 26 est disposée de manière à ce que son diamètre interne le plus grand soit identique au diamètre interne de la première partie et y soit connecté à l'extrémité amont de cette deuxième partie 26.

L'extrémité aval de la deuxième partie 26 est prolongée par une saillie axiale cylindrique d'épaisseur inférieure à la partie 26, et munie à sa périphérie d'un filetage 27.

Une troisième partie 28 (figure 3A) en matériau diélectrique, de la vitro-céramique par exemple, vient se fixer par vissage et collage sur la deuxième partie à l'aide d'une feuillure interne filetée de façon complémentaire au filetage 27.

A l'extérieur, cette troisième partie est constituée de deux sections, une première cylindrique 28A, de diamètre extérieur identique à celui de la deuxième partie 26, et une deuxième section, cylindrique également 28B, de diamètre extérieur supérieur à celui de la section 28A. Ces deux sections sont reliées par un épaulement 28C. Le conduit 19, à l'intérieur de cette troisième partie 28, présente également un premier tronçon de diamètre interne identique au plus petit diamètre interne de la deuxième partie 26, suivi, à un niveau axial légèrement en aval de l'épaulement 28C, d'un tronçon comportant un élargissement brutal du conduit, jusqu'à raccordement avec une quatrième partie 29.

Le raccordement de la troisième partie avec ladite quatrième partie 29 se fait également par collage et vissage de façon similaire au raccordement entre les deuxième et troisième parties, la partie 29 étant constituée d'un tube métallique cylindrique. Le diamètre intérieur de la quatrième partie est identique au plus grand diamètre intérieur de la troisième partie.

La quatrième partie 29 est celle qui est obturée à son extrémité aval par le bouchon 30 décrit précédemment.

Une deuxième enveloppe interne 40 (figure 3B), métallique, est disposée à l'intérieur de l'enveloppe externe 11, et s'étend axialement sensiblement à partir du milieu de la chambre 18 jusqu'à un niveau axial légèrement en amont de l'orifice 14. Cette enveloppe 40 ménage un espace vide 41 entre sa périphérie et la paroi interne de l'enveloppe externe 11. A ses deux extrémités l'enveloppe interne 40 est reliée à l'enveloppe externe par deux bagues de liaison 42 en amont et 43 en aval, d'épaisseur supérieure à celle de sa propre paroi, et munies chacune de deux joints annulaires 42' et 43' respectivement disposés à sa périphérie, permettant une liaison étanche avec l'enveloppe 11.

L'espace 41 est mis sous vide par des moyens appropriés connectés par une ouverture de liaison, connus en soi, non représentés.

En aval de la bague 43 de l'enveloppe intérieure s'étend axialement un élément 44 constitué d'un cylindre métallique comportant au moins un orifice 14' sensiblement au droit d'un orifice 14 de l'enveloppe extérieure. Dans le mode de réalisation de l'invention décrit, deux orifices 14' sont situés diamétralement à l'opposé, mettant en communication l'intérieur du tube avec l'orifice 14 d'évacuation. Un espace annulaire 45 sépare l'élément 44 de l'enveloppe 11. L'extrémité aval de l'élément 44, axialement en aval de l'orifice 14, se termine par un renflement radial formant bague d'étanchéité 46 muni de quatre joints d'étanchéité annulaires, logés dans des gorges ménagées à cet effet, répartis deux à deux à l'intérieur et à l'extérieur, et assurant l'étanchéité de la jonction entre cette bague et le tube 44 d'une part et l'enveloppe 11 d'autre part.

Une première chambre annulaire 45 se trouve ménagée entre la paroi 11 et l'élément 44.

De même, une deuxième chambre annulaire 47, concentrique à la première est ménagée entre la paroi 20 et l'élément 44.

Ainsi, les orifices 14", 14' et 14 communiquent par la succession de ces deux chambres annulaires 45 et 47 quelle que soit la position angulaire relative du conduit 19, de l'enveloppe intérieure 50 (ici, son élément 44), et de l'enveloppe extérieure 11.

En aval de la bague 46 se trouve disposé un élément de liaison 48 mobile axialement par rapport à l'enveloppe 11 et réglable dans sa position axiale par coopération avec un filetage interne 48' ménagé à cet effet à l'intérieur de l'extrémité aval de l'enveloppe 11.

L'élément mobile 48 est solidaire de la bague 46.

Globalement, la paroi interne de l'enveloppe interne 40 présente un diamètre supérieur au diamètre extérieur de la paroi 20 du conduit 19 sur l'étendue axiale des parties 24, 26 et jusqu'à la jonction 28'. Ainsi se trouve ménagé entre le conduit 19 et l'enveloppe interne 40 un espace annulaire 50.

Une cavité annulaire 52, constituée par une portion axiale de l'espace annulaire 50, est délimitée à son extrémité amont par une bague dite de court-circuit 51, une telle bague métallique reliant la paroi extérieure du conduit 19 à la paroi intérieure de l'enveloppe 40.

A son extrémité aval, la cavité 52 est délimitée par une bague annulaire 53, réalisée en matériau diélectrique, de la vitro-céramique par exemple. Une telle bague annulaire 53 est solidaire d'une seconde bague annulaire 54 réalisée en métal. La bague annulaire 54 solidaire de la bague annulaire en diélectrique 53, présente un rebord aval 55 formant butée axiale pour l'extrémité aval de la bague 53.

Un tel rebord 55 présente l'épaisseur cumulée des deux bagues 53 et 54, reliant la paroi interne de l'enveloppe 40 à la paroi du conduit 19.

La bordure interne du rebord 55 s'évase vers l'aval, selon un profil transversal arrondi. Autrement dit, le rebord 55 présente une section transversale interne s'accroissant vers l'aval selon une loi hyperbolique quelconque.

En pratique, l'évasement d'un tel rebord 55 a pour objet de constituer un pavillon favorisant, de manière connue, la formation d'un plasma.

Il est à noter qu'à ce niveau axial le conduit 19 est constitué de son troisième tronçon 28 réalisé en matériau diélectrique.

L'enveloppe 40 est scindée en deux parties, l'une amont 40A étant fixée à la buse 12 et l'autre, aval 40B.

La partie aval 40B est reliée à la partie amont 40A par un filetage 56 et, comme mentionné précédemment, à l'enveloppe 11 par un filetage 48'.

Les bagues 53 et 54 sont solidaires de la partie 40B de l'enveloppe 40.

Comme le montre plus particulièrement la figure 4, dans le mode de réalisation de l'invention illustré, trois rainures à 120° sont ménagées selon une direction axiale dans la bague 51, et prolongées radialement dans l'enveloppe 40A.

Afin de simplifier la construction, de telles rainures occupent radialement toute la hauteur de l'enveloppe 40A qui est, en pratique, ainsi réalisée en trois éléments délimités axialement. Trois guides 61 de section transversale rectangulaire et s'étendant globalement dans une direction axiale, sont logés dans les rainures 60, et solidarisent en rotation la bague 51 avec les trois éléments constituant la partie amont 40A de l'enveloppe. Trois soudures externes 62 relient ces trois éléments et fixent par-là même les guides 61 qui coopèrent avec les rainures 60.

Ainsi la bague 51 est libre de coulisser axialement et se trouve entraînée axialement par toute rotation du conduit 19, du fait de sa coopération avec le filetage 25 extérieur à celui-ci.

Une molette 36, solidaire en rotation du conduit 19, par l'intermédiaire du bouchon 30, est disposée accessible par l'extérieur du calorimètre. Une telle molette 36 permet d'actionner en rotation l'ensemble du conduit 19, entraînant ainsi en déplacement axial la bague 51 par l'intermédiaire du filetage 25.

Le débattement axial du conduit 19, déterminé par la longueur axiale de la chambre 18, est, en pratique, de l'ordre de 30 mm dans le mode de réalisation de l'invention décrit.

Dans le mode de réalisation de l'invention décrit, trois rainures axiales 59, (une seule est représentée, figure 3) décalées de 60° par rapport aux rainures 60, sont ménagées à la périphérie de l'enveloppe 40, et s'étendent axialement entre une extrémité amont à un niveau axial sensiblement médian de la cavité 52 pour des réglages moyens de la position axiale de la bague 51, et une bague de jonction 65 (figure 3B) radialement en saillie à partir de l'enveloppe 11. Une telle bague de jonction 65 se trouve à un niveau axial situé en aval du raccordement entre les parties 28 et 29 et en amont de la bague d'étanchéité 43. Ces trois rainures 59 logent trois câbles coaxiaux 66 dont une extrémité amont débouche par une ouverture 67 (figure 3) ménagée dans la partie 40A de l'enveloppe 40 à un niveau axial à proximité et immédiatement en aval de l'extrémité amont des rainures 59. Une extrémité dénudée du conducteur de chacun des câbles coaxiaux 66 débouche en saillie à l'intérieur de la cavité 52.

En aval (figure 3B), la bague 65, en saillie radiale à l'extérieur du calorimètre, coopère avec une deuxième bague 65' qu'elle épouse par sa face radiale aval, et à laquelle elle est fixée par des vis 68 (une seul est représentée) traversant les deux bagues axialement et coopérant avec des filetages axiaux ménagés dans la bague 65'. La bague 65 est munie de trois échancrures radiales, transversalement arrondies, permettant aux trois câbles 66 de sortir du calorimètre.

Avantageusement, dans le mode de réalisation décrit, l'enveloppe 11 est réalisée de deux parties solidarisées par les deux bagues 65 et 65'.

Une telle disposition simplifie notamment la construction du calorimètre selon l'invention, et en particulier, la mise en place des câbles coaxiaux 66.

Les câbles coaxiaux 66 constituent, en pratique, des antennes connectées à une source de rayonnement électromagnétique.

La cavité 52 constitue, en pratique, un résonateur accordé par ajustement de sa longueur à la fréquence choisie, par réglage de la position axiale de la bague de court-circuit 51.

La bague diélectrique 53 permet le passage du rayonnement électromagnétique produit à l'intérieur de la cavité 52 vers le conduit 19 au niveau axial de la partie 28, également réalisé en matériau diélectrique, de sa paroi 20.

Il est prévu à cette fin que l'étendue axiale de la bague diélectrique 53 soit telle qu'entre toutes les positions extrêmes de réglage, celle-ci soit toujours en contact avec la partie 28 du conduit 19.

Le fonctionnement d'un dispositif selon l'invention dont un mode de réalisation a été décrit s'effectue comme suit :

Un calorimètre selon l'invention est disposé en saillie à l'intérieur d'une veine d'écoulement de vapeur que l'on désire mesurer. Plus précisément, l'extrémité amont du minicalorimètre selon l'invention débouche dans une veine d'écoulement de vapeur, non représentée.

De préférence, l'axe du calorimètre est sensiblement normal à la veine, l'embouchure 17 étant tournée vers l'amont de la veine.

Par l'embouchure 17 pénètre un échantillon de vapeur, en général d'un mélange biphasé de vapeur et de gouttelettes en suspension, dont on désire mesurer le titre.

La vapeur traverse alors la chambre 18, et s'écoule dans le conduit 19, dans sa première partie 24 amont, puis dans la deuxième partie 26 de forme tronconique, dans laquelle, du fait de la réduction de diamètre du conduit, sa vitesse d'écoulement augmente.

Dans la troisième partie 28 du conduit, formée d'un matériau diélectrique, la vapeur est soumise à un rayonnement électromagnétique.

Plus précisément, la cavité 52, qui est accordée de manière à entrer en résonance, favorise ainsi le couplage électromagnétique de la source de rayonnement, à savoir les antennes 66, avec la vapeur s'écoulant à travers le conduit 19.

La bague 53 assure une jonction diélectrique entre la cavité 52 et la paroi diélectrique 28 permettant ainsi un tel couplage. Le rebord 55 de la bague métallique 54, de manière connue en soi, formant un pavillon, comme mentionné précédemment, optimise l'ionisation du mélange se trouvant à l'intérieur du conduit. Ceci provoque la formation d'un plasma gazeux.

En pratique, l'ensemble constitué par le conduit 19, la paroi diélectrique 28, la bague diélectrique 53 et le rebord 55, de la bague métallique 54, se comporte globalement comme un câble coaxial, prolongeant la cavité coaxiale 52, qui se comporte comme un résonateur quart d'onde ouvert, permettant d'obtenir un champ électromagnétique de valeur élevée, dans le conduit 28, axialement au voisinage du rebord 55, de la bague métallique 54.

De cette manière, un plasma gazeux se forme dans la troisième partie du conduit 19, et ensuite, à mesure de sa propagation axiale vers l'aval, le gaz initial se reconstitue, n'étant plus soumis au champ électromagnétique. Le brusque agrandissement du diamètre du conduit 19 dans la quatrième partie de ce conduit, ralentissant la vitesse de propagation, et par là même augmentant la pression du gaz, favorise la reconstitution de la vapeur.

A sa reconstitution, la vapeur est monophasée, c'est-à-dire qu'il s'agit de vapeur sèche. Elle est également en état dit surchauffé. Une telle vapeur remplit les conditions idéales pour permettre la mesure du titre de la vapeur initialement prélevée, par condensation ultérieure, et par mesure simultanée de la pression et de sa température dans la quatrième partie du conduit 19, dans laquelle elle se trouve reconstituée. La vapeur, pour cela, ressort par les orifices 14" de la conduite 19, dans la chambre annulaire 47, débouchant sur les orifices 14', qui eux-mêmes débouchent sur la chambre annulaire 45, qui, par l'orifice 14 amène à la conduite 15 d'évacuation de la vapeur vers un condensateur.

On notera que lors de son écoulement, la vapeur est maintenue dans une condition isothermique, grâce à la présence de l'espace annulaire 41 mis sous vide, qui sert à isoler l'intérieur du calorimètre des conditions thermiques extérieures.

En pratique, les conditions de réglages des positions axiales relatives du rebord 55 formant pavillon, de la cavité accordée 52, et de la partie tronconique 26, telles que nécessaires à l'amorçage de la formation du plasma sont différentes de celles qui sont préférables pour l'entretien du plasma en régime établi.

Il appartient donc à l'utilisateur de régler ces positions relatives en intervenant sur les organes suivants:

    - Le calorimètre étant, au départ, démonté à l'aide d'un outil adapté à venir en prise sur des moyens d'entraînement (non représentés), la position axiale de la partie aval de l'enveloppe interne 40B est préréglée, déterminant ainsi la position axiale du rebord 55 ;

- La culasse 13 et le conduit 19 sont ensuite disposés autour et dans le calorimètre, et leurs positions axiales sont réglées par rotation de la culasse 13 autour du filetage 21 ;

- La longueur de la cavité 52 est ensuite réglée par rotation de la molette 36, qui déplace la bague 51.

En poussant ou en tirant simplement la partie de la sonde 32 se trouvant à l'extérieur du calorimètre, on règle la position axiale de celle-ci.

L'invention ne se limite pas au mode de réalisation décrit, mais englobe toute variante d'exécution qu'il appartiendra à l'homme de l'art d'envisager.

## REVENDICATIONS

1) Calorimètre notamment destiné à la mesure du titre de vapeur humide comportant une buse de prélèvement de vapeur (12), un conduit (19) permettant l'écoulement de ladite vapeur, des moyens de mesure de température (33), des moyens de mesure de pression et des moyens d'évacuation de la vapeur, calorimètre caractérisé en ce qu'il comporte également des moyens de transformation de la vapeur en plasma, mettant en oeuvre au moins une source de rayonnement électromagnétique.

2) Calorimètre selon la revendication 1, caractérisé en ce que lesdits moyens de transformation de la vapeur en plasma comportent au moins une antenne de couplage (66) à une cavité résonante (52) de longueur réglage.

3) Calorimètre selon la revendication 2, caractérisé en ce que ladite cavité (52) est formée par un espace séparant un tronçon d'un conduit (19) permettant l'écoulement de la vapeur, constitué d'une paroi extérieure métallique (20), d'une enveloppe annulaire métallique (40) concentrique et qui l'entoure.

4) Calorimètre selon la revendication 2 ou 3, caractérisé en ce que la cavité (52) s'étend axialement entre d'une part un élément métallique annulaire (54) dont le bord aval intérieur (55) formant l'une des extrémités de la cavité est évasé, et d'autre part une bague annulaire (51) en un métal électroniquement bon conducteur mettant en court-circuit les parois dudit conduit (20) de ladite enveloppe (40).

5) Calorimètre selon la revendication 4, caractérisé en ce que ladite bague annulaire (51) est mobile axialement, de manière à permettre le réglage de la longueur de la cavité (52).

6) Calorimètre selon l'une quelconque des revendications précédentes, caractérisé en ce que ledit conduit comporte successivement, d'amont en aval, dans le sens de l'écoulement de la vapeur,

a) un premier tronçon de section transversale interne constante, métallique,

b) un deuxième tronçon métallique de section interne tronconique, le diamètre intérieur le plus petit étant situé vers l'aval, prolongeant le tronçon précédent,

c) un troisième tronçon, cylindrique, en matériau diélectrique de diamètre intérieur identique au plus petit diamètre intérieur du tronçon précédent,

d) un quatrième tronçon cylindrique de diamètre intérieur supérieur au diamètre intérieur du troisième tronçon, raccordé à celui-ci par une zone de discontinuité du diamètre intérieur, ledit quatrième tronçon comportant une partie amont en matériau diélectrique et une partie aval métallique,

e) au moins une ouverture ménagée dans la paroi de ce quatrième tronçon, latéralement à proximité de son extrémité aval qui est obturée par un bouchon.

7) Calorimètre selon la revendication 6, caractérisé en ce que les différents tronçons du conduit sont raccordés de manière à être solidaires, et en ce que l'ensemble du conduit est mobile axialement dans le calorimètre.

8) Calorimètre selon l'une quelconque des revendications précédentes, caractérisé en ce qu'il comporte des moyens de réglage de la position axiale du conduit.

9) Calorimètre selon la revendication 1, caractérisé en ce que lesdits moyens de mesure de température et lesdits moyens de mesure de pression sont disposés à l'extrémité amont d'une sonde (32) axialement coulissante se trouvant disposée à l'intérieur du conduit.

10) Procédé de mesure du titre d'un mélange biphasé de vapeur et de gouttelettes d'eau du genre comportant une étape de transformation du mélange biphasé en vapeur sèche, la température et la pression de la vapeur sèche étant mesurées, et ladite vapeur sèche étant ensuite condensée, procédé caractérisé en ce que le mélange biphasé est d'abord transformé en plasma et se reconstitue ensuite en vapeur sèche.

11) Procédé de mesure du titre d'un mélange biphasé suivant la revendication 10, caractérisé en ce que l'on transforme le mélange biphasé en plasma par rayonnement électromagnétique.

0226486

FIG.1

FIG.2

FIG.3

FIG.4

FIG.3A

FIG.3B